# EUROPÄISCHE PATENTSCHRIFT

(11) **EP 4 259 506 B1**
(45) Veröffentlichungstag und Bekanntmachung des Hinweises auf die Patenterteilung: **04.06.2025**
(21) Anmeldenummer: 20824521.7
(22) Anmeldetag: 10.12.2020
(51) Int. Cl.: B61K 9/00, B61K 9/12

(54) **PRÜFSTAND ZUR PRÜFUNG VON DREHGESTELLEN VON SCHIENENFAHRZEUGEN**
TEST STAND FOR TESTING BOGIES OF RAIL VEHICLES
BANC D'ESSAI POUR TESTER DES BOGIES DE VÉHICULES FERROVIAIRES

(43) Veröffentlichungstag der Anmeldung: 18.10.2023
(73) Patentinhaber: Nencki AG, 4901 Langenthal (CH)
(72) Erfinder: BORER, Hans, 4573 Lohn-Ammannsegg (CH); SCHERTENLEIB, Thomas, 4900 Langenthal (CH)
(74) Vertreter: Keller Schneider Patent- und Markenanwälte AG
(86) Internationale Anmeldenummer: PCT/EP2020/085560
(87) Internationale Veröffentlichungsnummer: WO 2022/122162

(56) Entgegenhaltungen:
- DE-A1- 102009 002 678
- JP-A- 2009 137 425
- KR-B1- 101 773 821
- US-A1- 2010 270 029

## Beschreibung

### Technisches Gebiet

Die Erfindung betrifft einen Prüfstand zur Prüfung von Drehgestellen von Schienenfahrzeugen, umfassend eine Lasteinwirkeinheit zur Erzeugung einer linearen Einwirkkraft für ein zu prüfendes Drehgestell, umfassend einen Hydraulikzylinder mit einer Kolbenstange und eine Übertragungseinrichtung zur Übertragung der Einwirkkraft auf das Drehgestell, wobei die Übertragungseinheit mit einem Ende der Kolbenstange wirkverbunden ist. Die Erfindung betrifft weiter ein Verfahren zur Prüfung von Drehgestellen.

### Stand der Technik

Mit einem Drehgestellprüfstand werden verschiedene Parameter von Drehgestellen von Schienenfahrzeugen gemessen und geprüft. Insbesondere werden mittels einer Lasteinwirkeinheit entlang einer linearen Achse oder mehrerer linearer Achsen Kräfte auf das Drehgestell ausgeübt, um die im Betrieb zu erwartenden Einwirkkräfte aufgrund des Fahrzeuggewichts sowie statischer und dynamischer Einflüsse zu simulieren. Verschiedene Funktionen und Parameter, z. B. Radlasten, Achsdistanzen, Einfederung usw., werden dann geprüft bzw. bestimmt. Je nach Ausrüstung des Prüfstandes ist es möglich, den Achsabstand, die Achs-Parallelität, die Federung, den Radrundlauf, den Raddurchmesser usw. vollautomatisch zu prüfen.

Nach der Prüfung werden alle Werte in einer Datenbank gespeichert und können als Prüfprotokoll ausgedruckt werden. Die Daten können in ein übergeordnetes System transferiert werden.

Damit verschiedene Drehgestellmodelle geprüft werden können, etwa Motor- und Laufdrehgestelle, verschiedene Spurweiten, 2- und 3-Achsen-Fahrwerke, können die relevanten Dimensionen des Prüfstands durch die manuelle oder automatisierte Verstellung einzelner Komponenten an die unterschiedlichen Erfordernisse angepasst werden.

Die Lasteinwirkeinheit übt lineare Kräfte auf das Drehgestell aus, üblicherweise vertikal nach unten gerichtete Kräfte. Hierzu wird mittels direkter Wegmessung eine definierte Position angefahren. Anschliessend wird kraftgesteuert die Kraft-Sollvorgabe angefahren. In der Regel sind zwei Lasteinwirkeinheiten vorhanden, die zur Anpassung an verschiedene Drehgestelldimensionen oder -geometrien entlang einer horizontalen Achse zueinander verschiebbar auf einem Querträger angeordnet sind. So können Kräfte simuliert werden, wie sie beispielsweise beim Durchfahren von Kurven auftreten.

Bekannte Lasteinwirkeinheiten umfassen hydraulische oder elektrische Lastzylinder. Hydraulische Lastzylinder sind z. B. als Differential-Hydraulikzylinder ausgebildet und umfassen ein Servoventil. Sie werden beispielsweise über einen Industrie-PC gesteuert. Solche Hydraulikzylinder sind empfindlich auf Querkräfte, die auf die Kolbenstange einwirken. Es ist deshalb in der Regel ein sogenanntes Hilfsjoch vorhanden, um Querkräfte aufzunehmen. Entsprechend ergeben sich trotz der eigentlich kostengünstigen Hydraulikzylinder für die Gesamtkonstruktion relativ hohe Kosten. Auch die Wartungs- und Instandhaltungskosten sind relativ hoch.

Eine Alternative stellen elektrische Lastzylinder dar. Sie sind beispielsweise als Hubspindelgetriebe mit Kugelgewindetrieb ausgebildet. Angetrieben werden sie von einem Synchronmotor, zu dessen Ansteuerung wird in der Regel ein spezifischer Antriebsverstärker eingesetzt. Allerdings sind derartige Antriebe und entsprechende Ersatzteile vergleichsweise teuer.

Sowohl hydraulische als auch elektrische Lastzylinder benötigen zudem im Betrieb relativ viel (elektrische) Energie.

Ein Prüfstand zum Testen eines Drehgestells ist aus KR101773821 B1 bekannt.

### Darstellung der Erfindung

Aufgabe der Erfindung ist es, einen dem eingangs genannten technischen Gebiet zugehörenden Prüfstand zur Prüfung von Drehgestellen zu schaffen, der kosten- und energieeffizient ist.

Die Lösung der Aufgabe ist durch die Merkmale des Anspruchs 1 definiert. Gemäss der Erfindung umfasst die Lasteinwirkeinheit des Prüfstands einen Hydraulikzylinder mit einer Kolbenstange, wobei der Hydraulikzylinder ein doppelt wirkender Zylinder ist, dessen Zylinderkammern von einer bi-direktionalen Axialkolbenpumpe mit Hydraulikflüssigkeit beaufschlagt werden.

Bei der Übertragungseinrichtung handelt es sich im einfachsten Fall um die Stirnseite der Kolbenstange. Diese kann zusätzlich ein Übertragungsstück tragen. Es sind auch kompliziertere Übertragungseinrichtungen einsetzbar, die z. B. die Kraft der Lasteinwirkeinheit in einer gewünschten Weise auf eine Einwirkfläche und/oder mehrere Einwirkflächen auf dem Drehgestell verteilen. Die Übertragungseinrichtung kann direkt auf das Drehgestell wirken oder auf am Drehgestell für die Prüfung spezifisch angeordnete Übertragungselemente.

Es sind Axialkolbenpumpen verfügbar, die eine sehr geringe interne Leckage aufweisen und mit sehr tiefen Drehzahlen betrieben werden können. Entsprechend ergibt sich ein hoher Wirkungsgrad: Die zum Antrieb der Pumpe benötigte Energie kann weitgehend in Arbeitsleistung des Hydraulikzylinders umgesetzt werden. Somit resultieren geringe Energiekosten.

Verglichen mit elektrischen Lastzylindern ergeben sich zudem geringe Herstellungskosten. Gegenüber hydraulischen Lastzylindern resultiert eine deutlich höhere mögliche Dynamik im Betrieb, was - wie weiter unten beschrieben - für gewisse Anwendungen im Rahmen eines Drehgestellprüfstandes vorteilhaft ist.

Mit Vorteil umfasst die Axialkolbenpumpe eine Taumelscheibe, die beidseitig mit jeweils mehreren Kolben zusammenwirkt. Solche Pumpen sind von der Firma Bucher Hydraulics, Klettgau-Griessen, Deutschland beispielsweise unter der Typenbezeichnung AXFM erhältlich. Es handelt sich um 4-Quadranten-Pumpen, die sich mit Drehzahlen von weniger als 1 U/min betreiben lassen. Sie zeichnen sich zudem durch eine besonders geringe interne Leckage aus. Diese Pumpen wurden ursprünglich für den Einsatz in batteriebetriebenen mobilen Maschinen (z. B. im Bergbaubereich) vorgeschlagen.

Mit Vorteil bilden die Axialkolbenpumpe und der Hydraulikzylinder zusammen mit einem Ausgleichsspeicher ein geschlossenes hydraulisches System. Der Ausgleichsspeicher (Druckspeicher) dient zum Ausgleich von eventuellen Leckagen und zum Entlüften des Systems. Aufgrund des geschlossenen Systems ergibt sich ein einfacher und kompakter Aufbau mit einer Mindestzahl an Komponenten. Entsprechend reduziert sind der Herstellungs- und Wartungsaufwand.

Im geschlossenen hydraulischen System können weitere Komponenten vorgesehen sein, insbesondere Druckbegrenzungs-, Regel- und Steuerventile.

Mit Vorteil verläuft die Kolbenstange beidseitig des Kolbens und ist unabhängig von einem Ausfahrzustand stets an beiden Längsenden des Zylindergehäuses abgestützt.

Somit ist nicht wie bei bisherigen Hydraulikzylinder ein Hilfsjoch notwendig, das bei ausgefahrenem Zylinder die einwirkenden Querkräfte aufnimmt. Es ergibt sich ein reduzierter Herstellungsaufwand.

Zudem kann so der Hydraulikzylinder als Gleichgangzylinder ausgebildet werden, bei dem das gesamte Volumen der Hydraulikflüssigkeit als Pendelvolumen genutzt werden kann.

Die Axialkolbenpumpe ist insbesondere von einem Servomotor angetrieben. Bevorzugt handelt es sich dabei um einen Synchronmotor, der die Pumpe direkt antreibt. Solche Motoren sind langlebig und ermöglichen einen präzisen und energieeffizienten Betrieb. Alternativ ist es möglich, Asynchronmotoren oder Gleichstrommotoren einzusetzen. Auch die Verwendung eines Motors, z. B. eines Drehstrommotors mit Frequenzumrichter, und mit separatem Drehgeber ist grundsätzlich möglich.

Besonders bevorzugt umfasst die Lasteinwirkeinheit des erfindungsgemässen Prüfstands somit
- einen doppelt wirkenden Hydraulikzylinder mit einer durchgehenden Kolbenstange, die unabhängig vom Ausfahrzustand stets an beiden Längsenden des Zylindergehäuses abgestützt ist,
- einen Ausgleichsbehälter, der mit dem Hydraulikzylinder und der Axialkolbenpumpe ein geschlossenes hydraulisches System bildet, und
- einen elektrischen Motor zum Antreiben der Axialkolbenpumpe.

Gegenüber bekannten Lasteinwirkeinheiten mit hydraulischen bzw. elektrischen Lastzylindern ergeben sich bei einer solchen Lasteinwirkeinheit neben geringen Wartungs- und Ersatzteilkosten Vorteile u. a. beim Energieverbrauch und bei der Geräuschentwicklung, was weiter unten näher ausgeführt wird.

Mit Vorteil sind eine Längenmesseinrichtung und eine Kraftmesseinrichtung am Hydraulikzylinder angeordnet, und es ist eine Antriebsregeleinrichtung vorhanden, die zum Empfang von Messsignalen mit der Längenmesseinrichtung und der Kraftmesseinrichtung und zur Übermittlung von Steuersignalen mit dem Servomotor verbunden ist. Dabei ist die Antriebsregeleinrichtung derart gesteuert, dass die Steuersignale in Abhängigkeit der Messsignale generiert werden.

Aufgrund des Servoantriebs lässt sich die Lasteinwirkeinheit des erfindungsgemässen Prüfstands präzise und mit sehr geringer Reaktionszeit regeln, was insbesondere auch Prüfungen ermöglicht, bei denen rasch wechselnde Einwirkungen auf das Drehgestell simuliert werden.

Im Rahmen des erfindungsgemässen Drehgestellprüfstandes sind zwei Lasteinwirkeinheiten zur Erzeugung vertikaler Einwirkkräfte entlang einer horizontalen Achse zueinander verschiebbar auf einem Querträger angeordnet. Dies ermöglicht die Simulation von Kräften, wie sie beispielsweise beim Durchfahren von Kurven auftreten oder von anderen einseitigen Belastungen auf das Drehgestell. In Kombination mit der erwähnten schnellen Regelung ergibt sich ein hoher Freiheitsgrad bei der Definition der Prüfzyklen.

Die Erfindung betrifft auch ein Verfahren zur Prüfung von Drehgestellen, bei dem vor einem Prüfungsschritt das Drehgestell durch Einwirkkräfte einer Lasteinwirkungseinheit mehrfach ein- und ausgefedert wird, um Feder- und/oder Dämpferelemente für die Prüfung zu konditionieren. Der Prüfungsschritt kann dabei mehrere Teilschritte umfassen, z. B. einen ersten Teilschritt oder eine erste Gruppe von Teilschritten zur Prüfung der Drehgestellgeometrie und einen zweiten Teilschritt oder eine zweite Gruppe von Teilschritten zur Prüfung der Federung. Eine Konditionierung ist insbesondere im Hinblick auf die Prüfung von Drehgestellen mit Feder- und/oder Dämpferelementen aus elastomeren Materialien, z. B. natur- oder synthesekautschukbasierten Materialien, von Vorteil. Mit ihr werden solche Elemente auf eine realistische Betriebstemperatur gebracht, die den Bedingungen im betrieblichen Einsatz des Drehgestells entspricht.

Der erfindungsgemässe Drehgestellprüfstand ist besonders gut für die Durchführung dieses Verfahrens geeignet, weil die Krafteinwirkung mit hoher Dynamik verändert werden kann. Entsprechend sind hohe Frequenzen der Ein- und Ausfederung möglich, wodurch der Zeitaufwand für die Konditionierung erheblich verringert wird.

So erfolgt das Ein- und Ausfedern bevorzugt mit einer Frequenz von 1 Hz oder mehr. Dadurch lassen sich die entsprechenden Elemente innert kurzer Zeit konditionieren, und die Dauer des Prüfzyklus wird durch die Konditionierung nicht wesentlich verlängert. Bei einer Konditionierung mit derartigen Frequenzen fällt zudem eine zwischenzeitliche Abkühlung der Elemente nicht ins Gewicht.

Um eine ausreichende Konditionierung vor dem Prüfungsschritt sicherzustellen, erfolgen bevorzugt mindestens 10 Ein- und Ausfedervorgänge.

Die Einwirkkräfte für das Ein- und Ausfedern betragen dabei zumindest während eines Teils der Konditionierung mindestens 70% der maximalen Einwirkkräfte beim nachfolgenden Prüfungsschritt (bzw. bei den nachfolgenden Prüfungsschritten).

Die Verwendungsmöglichkeit der erfindungsgemässen Vorrichtung ist natürlich nicht auf das spezifische Verfahren mit Vorkonditionierung beschränkt. Sie weist auch Vorteile bei der Verwendung in herkömmlichen Prüfverfahren auf, wo eine Vorkonditionierung von Drehgestellelementen beispielsweise nicht notwendig oder nicht erwünscht ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: Eine schematische Frontansicht eines erfindungsgemässen Drehgestell-Prüfstandes;
- Fig. 2: ein Schrägbild des Querträgers des Drehgestell-Prüfstandes mit daran angeordneten Lasteinwirkeinheiten;
- Fig. 3: eine Seitenansicht einer erfindungsgemässen Lasteinwirkeinheit;
- Fig. 4: ein Schrägbild der Lasteinwirkeinheit;
- Fig. 5: ein Hydraulikschema der Lasteinwirkeinheit; und
- Fig. 6: eine Darstellung des Kraftverlaufs während eines Prüfverfahrens mit dem erfindungsgemässen Drehgestell-Prüfstand.

Grundsätzlich sind in den Figuren gleiche Teile mit gleichen Bezugszeichen versehen.

### Wege zur Ausführung der Erfindung

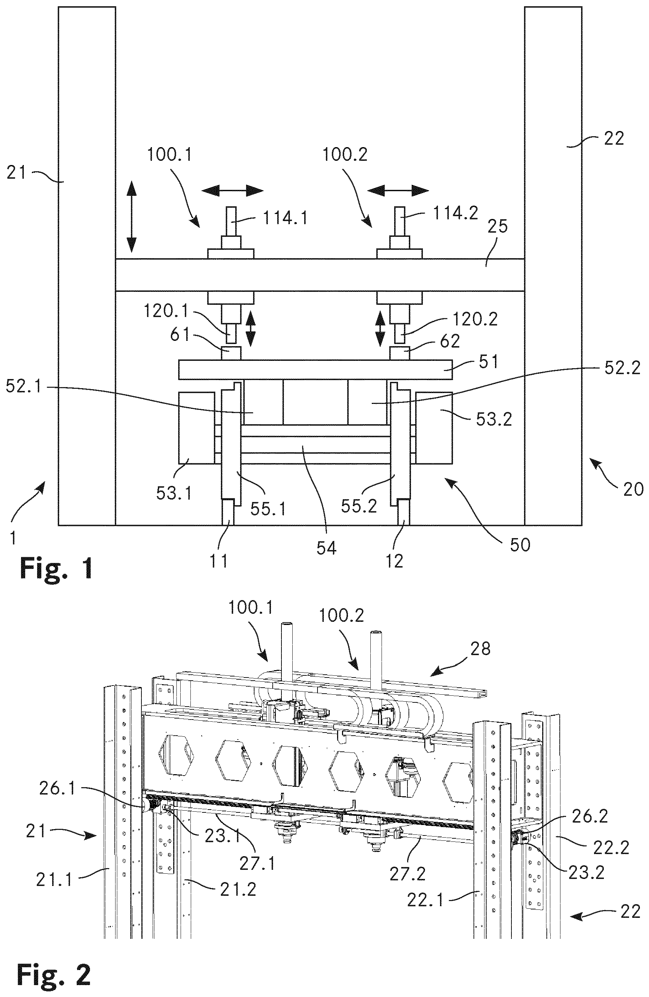

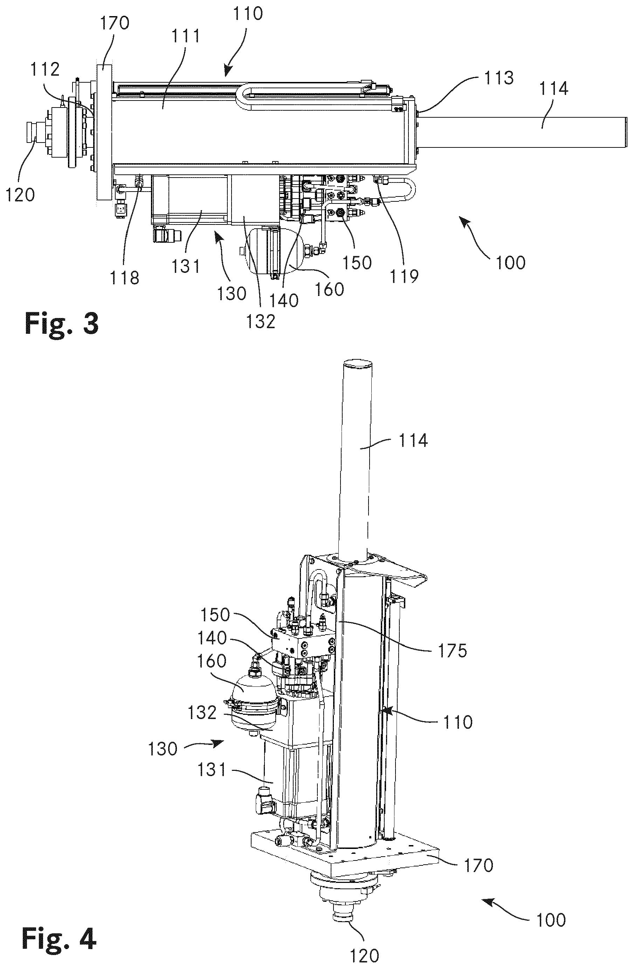

Die Figur 1 zeigt eine schematische Frontansicht eines erfindungsgemässen Drehgestell-Prüfstandes. Die Figur 2 zeigt ein Schrägbild des Querträgers des Drehgestell-Prüfstandes mit daran angeordneten Lasteinwirkeinheiten. Der Prüfstand 1 umfasst Auflagen 11, 12 für ein Drehgestell 50. Diese können in an sich bekannter Weise schienenartig für jeweils die Räder einer Spur oder als separate Einheiten ausgebildet sein. Der Prüfstand 1 umfasst weiter ein Portal 20 mit zwei Stützen 21, 22, an denen vertikal entlang einer Linearführung verschieblich ein Querträger 25 gelagert ist. Jede der Stützen 21, 22 besteht aus zwei Vertikalträgern 21.1, 21.2; 22.1, 22.2, die parallel zueinander angeordnet sind. Die äusseren Enden des Querträgers 25 bewegen sich im Zwischenraum der jeweiligen Vertikalträger 21.1, 21.2; 22.1, 22.2. Die Linearführung umfasst vertikale Schienen und jeweils einen darauf verfahrbaren Schlitten 23.1, 23.2, an dem der Querträger 25 befestigt ist. Auf jedem der Schlitten 23.1, 23.2 ist ein Antriebsmotor 26.1, 26.2 für eine Spindel 27.1, 27.2 angeordnet. Die beiden Spindeln 27.1, 27.2 verlaufen vom jeweiligen Schlitten 23.1, 23.2 ausgehend horizontal nach innen, parallel zum Querträger 25, und dienen zur Querverstellung von zwei am Querträger 25 über eine weitere Linearführung angeordnete Lasteinwirkeinheiten 100.1, 100.2. Die Lasteinwirkeinheiten 100.1, 100.2 sind identisch aufgebaut. Sie sind weiter unten, im Zusammenhang mit den Figuren 3-5, näher beschrieben. Der Querträger 25 umfasst weiter eine Versorgungsanordnung 28 mit Schleppketten zur Versorgung der Lasteinwirkeinheiten 100.1, 100.2 mit elektrischer Energie und Steuersignalen. Auch Sensorsignale von an den Lasteinwirkeinheiten 100.1, 100.2 angeordneten Sensoren werden über die Schleppketten der Versorgungsanordnung 28 zu einer Steuerungs- und/oder Auswertestation übertragen.

Das Drehgestell 50 ist in der Figur 1 nur schematisch dargestellt. Es umfasst einen Drehgestellrahmen 51, an dem über Sekundärfedern 52.1, 52.2 und Radlager 53.1. 53.2 mit Primärfederung die Radachse 54 mit den Rädern 55.1, 55.2 des Drehgestells 50 gelagert ist.

Die Lasteinwirkeinheiten 100.1, 100.2 weisen an ihrem unteren Ende an Kolbenstangen 114.1, 114.2 angeordnete Übertragungsstücke 120.1, 120.2 auf, die mit zwei Einwirkpunkten 61, 62 am Drehgestell 50 zusammenwirken. Im dargestellten Beispiel befinden sich die Einwirkpunkte 61, 62 in Längsrichtung mittig auf dem Drehgestellrahmen und in Querrichtung jeweils in einer Ebene, die ungefähr durch die Mitte der Laufflächen der Räder der entsprechenden Seite definiert wird.

Die Kräfte, die von den beiden Lasteinwirkeinheiten 100.1, 100.2 auf das Drehgestell 50 ausgeübt werden, sind unabhängig voneinander steuerbar. Es lassen sich somit sowohl in Querrichtung symmetrische als auch asymmetrische Kräfte auf das Drehgestell 50 ausüben. Mittels geeigneter, an sich bekannter Messeinrichtungen lässt sich die Reaktion des Drehgestells 50 auf die einwirkenden Kräfte erfassen.

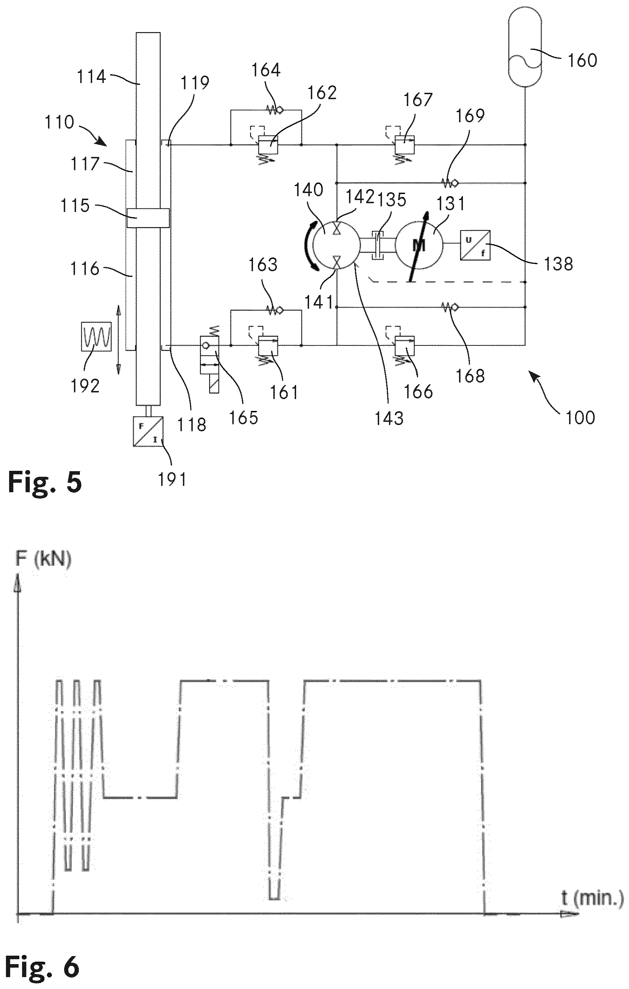

Die Figur 3 ist eine Seitenansicht einer erfindungsgemässen Lasteinwirkeinheit, die Figur 4 zeigt ein Schrägbild derselben. Die Lasteinwirkeinheit 100 umfasst einen Hydraulikzylinder 110 mit einem Zylindergehäuse 111 in dem über axial endseitig angeordnete Lager 112, 113 eine Kolbenstange 114 mit einem Kolben 115 (vgl. Figur 5) abdichtend gelagert ist. Beidseitig des Kolbens wird je eine Zylinderkammer 116, 117 gebildet. An einem der freien Enden der Kolbenstange 115 ist ein Übertragungsstück 120 fest angeordnet. Das Zylindergehäuse 111 weist zudem zwei Anschlüsse 118, 119 auf, die je in eine der Zylinderkammern 116, 117 münden. Der Querschnitt des Zylindergehäuses 111 ist konstant, so dass der Hydraulikzylinder 110 als Gleichgangzylinder funktioniert.

Die Lasteinwirkeinheit 100 weist zudem einen Antriebsteil 130 auf, der gemeinsam mit dem Hydraulikzylinder 110 auf einer Grundplatte 170 befestigt ist. Der Antriebsteil 130 umfasst einen Servomotor 131, an dessen Abtriebsende ein Pumpenträger 132 angeflanscht ist. An diesem Pumpenträger 132 ist wiederum eine Axialkolbenpumpe 140 angeflanscht. Diese wird über eine I<upplung direkt vom Servomotor 131 angetrieben. Die Axialkolbenpumpe 140 trägt schliesslich einen Ventilblock 150. Die genannten, aneinander angeflanschten Komponenten sind zusammen mit einem Ausgleichsspeicher 160, der als Tank für die Hydraulikflüssigkeit ausgebildet ist, auf einem L-förmigen Trägerblech 175 befestigt und sind parallel zum Hydraulikzylinder 110 hintereinander angeordnet. Dieses wiederum ist mit seinem kürzeren Schenkel mit der Grundplatte 170 verschraubt.

Beim verwendeten Servomotor 131 handelt es sich beim beschriebenen Ausführungsbeispiel um einen Motor des Typs AM 8072 des Herstellers Beckhoff Automation, Verl, Deutschland. Er wird von einem Antriebsverstärker des Typs AX 5112 desselben Herstellers angesteuert.

Bei der verwendeten Axialkolbenpumpe 140 handelt es sich beim beschriebenen Ausführungsbeispiel um eine Pumpe des Typs AXFM/18, von Bucher Hydraulics, Klettgau-Griessen, Deutschland. Es handelt sich dabei um eine Axialkolbenpumpe mit einer Taumelscheibe, die beidseitig auf mehrere Kolben wirkt. Sie kann in allen vier Quadranten betrieben werden und dies auch mit Drehzahlen von 1 U/min oder weniger. Die maximale Drehzahl beträgt 5'000 U/min, die Verdrängung 18 cm³/Umdrehung. Der maximale Nominaldruck beträgt 450 bar (jeweils gemäss Datenblatt 03.2019).

Der Hydraulikzylinder 110 weist einen Kolbendurchmesser von 150 mm, einen Kolbenstangendurchmesser von 100 mm und einen Hub von 800 mm auf. Der maximale Vorschub beträgt 20 mm/s, die maximale Last 250 kN.

Der Ventilblock 150 verbindet die Axialkolbenpumpe 140 mit dem Hydraulikzylinder 110 und dem Ausgleichsspeicher 160. An ihm sind zudem Druckbegrenzungsventile in Patronenbauweise angeordnet (vgl. Figur 5).

Die Figur 5 zeigt ein Hydraulikschema der Lasteinwirkeinheit 100. Die Axialkolbenpumpe 140 wird über eine Kupplung 135 vom Servomotor 131 angetrieben. Letzterer wird vom Antriebsverstärker 138 gespeist. Die Axialkolbenpumpe 140 ist mit ihren Druckanschlüssen 141, 142 mit den Anschlüssen 118, 119 der beiden Zylinderkammern 116, 117 des Hydraulikzylinders 110 verbunden. In den Verbindungsleitungen ist je ein einstellbares Druckbegrenzungsventil 161, 162 angeordnet. Diese begrenzen den Druck in der Leitung von der jeweiligen Zylinderkammer 116, 117 zur Axialkolbenpumpe 140. In der Gegenrichtung kann die Hydraulikflüssigkeit dank parallel zu den Druckbegrenzungsventilen 161, 162 angeordneten Rückschlagventilen 163, 164 frei fliessen. In der Leitung zwischen dem Anschluss 141 der Axialkolbenpumpe 140 und dem Anschluss 118 der unteren Zylinderkammer 116 ist zudem ein steuerbares Ventil 165 angeordnet, mit dem ein Rückfluss aus der Zylinderkammer 116 zur Axialkolbenpumpe 140 verhindert werden kann.

Die Druckanschlüsse 141, 142 der Axialkolbenpumpe 140 sind auch mit dem Ausgleichsspeicher 160 verbunden, wiederum über einstellbare Druckbegrenzungsventile 166, 167, die den Druck in der Leitung von der Axialkolbenpumpe 140 zum Ausgleichsspeicher 160 begrenzen. In der Gegenrichtung kann die Hydraulikflüssigkeit dank parallel zu den Druckbegrenzungsventilen 166, 167 angeordneten Rückschlagventilen 168, 169 frei fliessen.

Schliesslich ist die Axialkolbenpumpe 140 über einen Leckageanschluss 143 ebenfalls mit dem Ausgleichsspeicher 160 verbunden.

Am unteren Ende des Hydraulikzylinders 110 ist eine Kraftmesseinheit 191 in Form einer Lastmesszelle angeordnet, die die vom Hydraulikzylinder 110 ausgeübte Kraft misst und an eine Steuerung übermittelt. Ebenfalls am Hydraulikzylinder 110 ist eine Wegmesseinheit 192 angeordnet, die die aktuelle Position des Kolbens 115 bzw. der Kolbenstange 114 bestimmt und ebenfalls an die Steuerung übermittelt.

Die Figur 6 ist eine Darstellung des Kraftverlaufs während eines Prüfverfahrens mit dem erfindungsgemässen Drehgestell-Prüfstand. Der dargestellte Zyklus gliedert sich in folgende Phasen:

| **Phase** | **Beginn** [min] | **Ende** [min] | **Aktionen** |
|---|---|---|---|
| Zuführen | 0 | 3 | Zuführen und Positionieren des Drehgestells |
| Konditionieren | 3 | 6 | Oszillationen zwischen 15 und 150 kN, Frequenz 1 Hz |
| Geometrieprüfung | 6 | 16 | 1. Phase bei 75 kN, 2. Phase bei 150 kN |
| Luftfederprüfung | 16 | 27 | 1. Phase bei 5 kN, 2. Phase bei 75 kN, 3. Phase bei 150 kN |
| Entfernen | 27 | 3 | Ausbringen des Drehgestells |

Im Rahmen der Konditionierung werden die Komponenten des Drehgestells, insbesondere diejenigen aus elastomeren Werkstoffen, durchgewalkt und dabei in einen Zustand gebracht, der einem üblichen Betriebszustand beim Einsatz im Bahnbetrieb entspricht. Die beiden Teilschritte der Prüfung entsprechen denjenigen gängiger Prüfverfahren.

Für die Prüfung fährt der Hydraulikzylinder 110 anhand der Signale der Wegmesseinheit 192 eine definierte Position an. Anschliessend werden kraftgesteuert, anhand der Signale der Kraftmesseinheit 191, die Kraft-Sollvorgaben angefahren.

Zum Vergleich der erfindungsgemässen Lasteinwirkeinheit mit bekannten Varianten wurde der beschriebene Zyklus als Prüfzyklus herangezogen, wobei im Rahmen des Konditionierens nur gerade drei Oszillationen mit niedriger Frequenz durchgeführt wurden, weil höhere Frequenzen für die rein hydraulische Lasteinwirkeinheit nicht erzielbar waren. Die Ergebnisse eines einstündigen Probelaufs waren wie folgt:

| | hydraulische LEE | elektrische LLE | erfindungsgemässe LLE |
|---|---|---|---|
| Anschlussleistung [kW] | 7.5 | 8.0 | 4.5 |
| Gesamtenergie-bedarf [kWh] | 2.35 | 1.80 | 0.85 |
| max. Geräuschentwicklung [dB(A)] | 75 | 70 | 65 |
| Wirkungsgrad | 0.7 | 0.6 | 0.85 |

Die erfindungsgemässe Lasteinwirkeinheit weist somit einen deutlich geringeren Energiebedarf auf. Sie zeichnet sich zudem durch eine geringe Geräuschentwicklung aus.

Die Erfindung ist nicht auf das dargestellte Ausführungsbeispiel beschränkt. Insbesondere können einzelne Komponenten des Systems anders ausgelegt sein, und die geometrische Anordnung der Elemente der Lasteinwirkeinheit und die Montage der Lasteinwirkeinheit am Prüfstand können anders ausgeführt sein.

Zusammenfassend ist festzustellen, dass die Erfindung einen Prüfstand zur Prüfung von Drehgestellen schafft, der kosten- und energieeffizient ist.

## Patentansprüche

1. Prüfstand (1) zur Prüfung von Drehgestellen (50) von Schienenfahrzeugen, umfassend:
zwei Lasteinwirkeinheiten (100.1, 100.2) zur Erzeugung einer linearen Einwirkkraft für ein zu prüfendes Drehgestell (50), jeweils umfassend einen Hydraulikzylinder (110) mit einer Kolbenstange (114) sowie einer Übertragungseinrichtung zur Übertragung der Einwirkkraft auf das Drehgestell (50),
welche mit einem Ende der Kolbenstange (114) wirkverbunden ist, **dadurch gekennzeichnet, dass** die Hydraulikzylinder (110) doppelt wirkende Zylinder sind, deren Zylinderkammern (116, 117) von einer bi-direktionalen Axialkolbenpumpe (140) mit Hydraulikflüssigkeit beaufschlagt werden,
wobei die Lasteinwirkeinheiten (100.1, 100.2) zur Erzeugung vertikaler Einwirkkräfte entlang einer horizontalen Achse zueinander verschiebbar auf einem Querträger (25) angeordnet sind.

2. Prüfstand nach Anspruch 1, **dadurch gekennzeichnet, dass** die Axialkolbenpumpe (140) eine Taumelscheibe umfasst, die beidseitig mit jeweils mehreren Kolben (115) zusammenwirkt.

3. Prüfstand nach Anspruch 1 oder 2, **dadurch gekennzeichnet, dass** die Axialkolbenpumpe (140) und der Hydraulikzylinder (110) zusammen mit einem Ausgleichsspeicher (160) ein geschlossenes hydraulisches System bilden.

4. Prüfstand nach einem der Ansprüche 1 bis 3, **dadurch gekennzeichnet, dass** die Kolbenstange beidseitig des Kolbens (115) verläuft und unabhängig von einem Ausfahrzustand stets an beiden Längsenden eines Zylindergehäuses (111) abgestützt ist.

5. Prüfstand nach einem der Ansprüche 1 bis 4, **dadurch gekennzeichnet, dass** die Axialkolbenpumpe (140) von einem Servomotor (131) angetrieben ist.

6. Prüfstand nach Anspruch 5, **dadurch gekennzeichnet, dass** eine Längenmesseinrichtung und eine Kraftmesseinrichtung am Hydraulikzylinder (110) angeordnet sind und dass eine Antriebsregeleinrichtung vorhanden ist, die zum Empfang von Messsignalen mit der Längenmesseinrichtung und der Kraftmesseinrichtung und zur Übermittlung von Steuersignalen mit dem Servomotor (131) verbunden ist, wobei die Antriebsregeleinrichtung derart gesteuert ist, dass die Steuersignale in Abhängigkeit der Messsignale generiert werden.

7. Verfahren zur Prüfung von Drehgestellen (50) mit einem Prüfstand nach einem der Ansprüche 1 bis 6, **dadurch gekennzeichnet, dass** vor einem Prüfungsschritt das Drehgestell (50) durch Einwirkkräfte einer Lasteinwirkungseinheit (100.1, 100.2) mehrfach ein- und ausgefedert wird, um Feder- und/oder Dämpferelemente für die Prüfung zu konditionieren.

8. Verfahren nach Anspruch 7, **dadurch gekennzeichnet, dass** das Ein- und Ausfedern mit einer Frequenz von 1 Hz oder mehr erfolgt.

9. Verfahren nach Anspruch 7 oder 8, **dadurch gekennzeichnet, dass** vor dem Prüfungsschritt mindestens 10 Ein- und Ausfedervorgänge erfolgen.

10. Verfahren nach einem der Ansprüche 7 bis 9, **dadurch gekennzeichnet, dass** die Einwirkkräfte für das Ein- und Ausfedern min. 70% der maximalen Einwirkkräfte beim nachfolgenden Prüfungsschritt betragen.

## Claims

1. A test stand (1) for testing bogies (50) of rail vehicles, comprising:
two load application units (100.1, 100.2) for generating vertical application forces to a bogie (50) to be tested, each comprising a hydraulic cylinder (110) with a piston rod (114) as well as a transmission unit for transmitting the application force to the bogie (50), the transmission unit being operatively connected to one end of the piston rod (114), **characterized in that** the hydraulic cylinders (110) are double-acting cylinders whose cylinder chambers (116, 117) are pressurized with hydraulic fluid by a bidirectional axial piston pump (140), wherein the load application units (100.1, 100.2) for generating a linear application force are arranged on a cross member (25) so as to be displaceable relative to one another along a horizontal axis.

2. Test stand according to claim 1, **characterized in that** the axial piston pump (140) comprises a swash plate which cooperates on both sides with several pistons (115) in each case.

3. Test stand according to claim 1 or 2, **characterized in that** the axial piston pump (140) and the hydraulic cylinder (110) together with a compensating reservoir (160) form a closed hydraulic system.

4. Test stand according to one of claims 1 to 3, **characterized in that** the piston rod extends on both sides of the piston (115) and is always supported at both longitudinal ends of a cylinder housing (111) regardless of an extension state.

5. Test stand according to one of claims 1 to 4, **characterized in that** the axial piston pump (140) is driven by a servomotor (131).

6. Test stand according to claim 5, **characterized in that** a length measuring device and a force measuring device are arranged on the hydraulic cylinder (110) and that a drive control device is provided which is connected to the length measuring device and the force measuring device for receiving measuring signals and to the servomotor (131) for transmitting control signals, the drive control device being controlled in such a way that the control signals are generated as a function of the measuring signals.

7. A method for testing bogies (50) with a test stand according to one of claims 1 to 6, **characterized in that**, before a testing step, the bogie (50) is deflected in and out several times by application forces of a load application unit (100.1, 100.2) in order to condition spring and/or damper elements for the test.

8. The method according to claim 7, **characterized in that** the springing in and out occurs at a frequency of 1 Hz or more.

9. The method according to claim 7 or 8, **characterized in that** at least 10 spring-in and spring-out operations are performed before the testing step.¨

10. The method according to one of the claims 7 to 9, **characterized in that** the application forces for springing in and springing out are at least 70% of the maximum application forces in the subsequent testing step.

## Revendications

1. Banc d'essai (1) de contrôle de bogies (50) de véhicules ferroviaires, comprenant :
deux unités d'effet de charge (100.1, 100.2) pour produire une force d'effet linéaire pour un bogie à contrôler (50), comprenant respectivement un vérin hydraulique (110) avec une tige de piston (114), ainsi qu'
un système de transmission pour la transmission de la force d'effet au bogie (50), lequel est relié de façon fonctionnelle à une extrémité de la tige de piston,
**caractérisé en ce que** les vérins hydrauliques (110) sont des vérins à double effet, dont les chambres cylindriques (116, 117) sont sollicitées par un liquide hydraulique d'une pompe à pistons axiaux bidirectionnelle (140),
sachant que les unités d'effet de charge (100.1, 100.2) sont disposées sur une traverse (25) pouvant être mobiles l'une par rapport à l'autre pour produire des forces d'effet verticales le long d'un axe horizontal.

2. Banc d'essai selon la revendication 1, **caractérisé en ce que** la pompe à pistons axiaux (140) comprend un plateau oscillant, qui coopère respectivement des deux côtés avec plusieurs pistons (115).

3. Banc d'essai selon la revendication 1 ou 2, **caractérisé en ce que** la pompe à pistons axiaux (140) et le vérin hydraulique (110) forment ensemble avec un réservoir de compensation (160) un système hydraulique fermé.

4. Banc d'essai selon l'une quelconque des revendications 1 à 3, **caractérisé en ce que** la tige de piston passe des deux côtés du piston (115) et est toujours appuyé sur les deux extrémités longitudinales d'un carter cylindrique (111) indépendamment d'un état de sortie.

5. Banc d'essai selon l'une quelconque des revendications 1 à 4, **caractérisé en ce que** la pompe à pistons axiaux (140) est entraînée par un servomoteur (131).

6. Banc d'essai selon la revendication 5, **caractérisé en ce qu'**un système de mesure de longueur et un système de mesure de force sont disposés sur un vérin hydraulique (110) et **en ce qu'**un système de régulation d'entraînement est présent, qui est relié au système de mesure de longueur et au système de mesure de force pour recevoir des signaux de mesure et au servomoteur (131) pour transmettre des signaux de commande, sachant que le système de régulation d'entraînement est commandé de telle manière que les signaux de commande sont générés en fonction des signaux de mesure.

7. Procédé d'essai de bogies (50) avec un banc d'essai selon l'une des revendications 1 à 6, **caractérisé en ce qu'**avant une étape d'essai, le bogie (50) est comprimé et relâché plusieurs fois par des forces d'effet d'une unité d'effet de charge (100.1, 100.2) pour conditionner pour l'essai des éléments faisant ressort et/ou amortisseurs.

8. Procédé selon la revendication 7, **caractérisé en ce que** la compression et le débattement ont lieu avec une fréquence de 1 Hz ou plus.

9. Procédé selon la revendication 7 ou 8, **caractérisé en ce qu'**avant l'étape d'essai, au moins 10 opérations de compression et de débattement ont lieu.

10. Procédé selon l'une quelconque des revendications 7 à 9, **caractérisé en ce que** les forces d'effet pour la compression et le débattement représentent au minimum 70 % des forces d'effet maximales lors de l'étape d'essai suivante.
